**Europäisches Patentamt**

**European Patent Office**

**Office européen des brevets**

(11) Veröffentlichungsnummer: **0 119 443**
**B1**

(12) **EUROPÄISCHE PATENTSCHRIFT**

(45) Veröffentlichungstag der Patentschrift:
27.04.88

(21) Anmeldenummer: **84101371.7**

(22) Anmeldetag: **10.02.84**

(51) Int. Cl.⁴: **B 07 B 13/00**, B 07 B 13/16,
B 65 G 47/18

(54) Vorrichtung zum Sortieren und Trennen eines Wertstoffgemisches.

(30) Priorität: **17.02.83 DE 3305368**

(43) Veröffentlichungstag der Anmeldung:
**26.09.84 Patentblatt 84/39**

(45) Bekanntmachung des Hinweises auf die Patenterteilung:
**27.04.88 Patentblatt 88/17**

(84) Benannte Vertragsstaaten:
**AT BE CH DE FR GB IT LI NL SE**

(56) Entgegenhaltungen:
**DE-B-2 331 136**
**GB-A-1 573 533**
**US-A-2 360 808**

(73) Patentinhaber: **Lindemann Maschinenfabrik GmbH,
Erkrather Strasse 401, D-4000 Düsseldorf 1 (DE)**

(72) Erfinder: **Kaldenbach, Erwin, Berliner Strasse 58,
D-4030 Ratingen (DE)**

(74) Vertreter: **Bergen, Klaus, Dipl.- Ing.,
Patentanwälte Dr.- Ing. Reimar König Dipl.- Ing.
Klaus Bergen Wilhelm- Tell- Strasse 14 Postfach
260162, D-4000 Düsseldorf 1 (DE)**

LIBER, STOCKHOLM 1988

## Beschreibung

Die Erfindung betrifft eine Vorrichtung zum Sortieren und Trennen eines Wertstoffgemisches, insbesondere eines überwiegend aus Flaschen und Papier bestehenden Wertstoffgemisches mit einer einer Zuführung vorgeordneten Einspeisung und einer der Zuführung nachgeordneten Sortierstrecke.

Die Rückgewinnung von Wertstoffen aus Abfällen, insbesondere aus häuslichen Abfällen, wird heute nicht nur allgemein als notwendig angesehen, sondern auch in verschiedenster Art praktiziert bzw. versucht. Nicht zuletzt wegen der regional recht unterschiedlichen Verhältnisse haben sich unterschiedliche Behandlungsmethoden herausgebildet, wobei auch Umweltfaktoren und insbesondere Investitionskosten eine große Rolle spielen.

Von den insgesamt bekannten Verfahren und Vorrichtungen befaßt sich ein Teil mit der Aufbereitung von sogenannten Wertstoffmischungen, die ein vorsortiertes Ausgangsmaterial darstellen, das keine Obst-, Gemüse- oder dgl. Küchenabfälle, Asche und ähnliches mehr enthält. Die am Anfallort vorsortierten und gesondert gesammelten Wertstoffe umfassen im wesentlichen Glas (möglichst ganze Flaschen), Papier, Pappe, Plastikbehälter und -folien, Metalle, Textilien, Holz, Leder und artverwandte Stoffe. Diese Bestandteile liegen als Gemisch vor und werden auch in der sogenannten "grünen Tonne" gesammelt.

Die vorliegende Erfindung befaßt sich mit derartigen Gemischen, die nachfolgend auch als "Wertstoff" bezeichnet werden und im vorliegenden Fall zum größten Teil aus Flaschen und Papier bestehen.

Andererseits sind bei den insgesamt bekannten Sortierverfahren wiederum zwei Gruppen zu unterscheiden, und zwar solche, die mit zerkleinerten und solche, die mit unzerkleinerten Abfällen bzw. Wertstoffen arbeiten. Die in neuerer Zeit entwickelten Verfahren arbeiten fast ausnahmslos mit einer Vorzerkleinerung, die nicht zuletzt aufgrund des nicht unerheblichen Kraftbedarfs den Maschinen- und Investitionsaufwand beträchtlich erhöht. Darüber hinaus ergeben sich durch die Vorzerkleinerung Probleme hinsichtlich der Lärmemission, Bodenvibrationen, Geruchsentwicklung und der Staubbeseitigung sowie der Verschmutzung der Wertstoffe durch Öffnung von Behältern, deren Restinhalte, wie z. B. Fette, Öle, Farben etc. die Qualität beispielsweise des Wertstoffs Papier erheblich herabsetzen. Es ist auch nicht etwa davon auszugehen, daß der Aufwand der Zerkleinerung in jedem Fall den Wert der geschaffenen Produkte erhöht. Um den Mehraufwand der Vorzerkleinerung gering zu halten, sind die Anlagen nur bei großen Durchsatzleistungen einigermaßen rentabel zu betreiben.

Das Aufbereiten unzerkleinerter Wertstoffe weist zwar die zuvor genannten Nachteile im wesentlichen nicht auf, war jedoch bisher auch mit erheblichen Problemen verbunden. So wird zwar in der GB-PS-1 573 533 ein relativ einfacher Weg zur Wertstofftrennung dargestellt und beschrieben, der jedoch mit erheblichen Mängeln behaftet ist, die der Grund dafür sind, daß sich diese Art der Aufbereitung als praktikable Lösung nicht durchgesetzt hat. Das zugeführte Wertstoffgemisch fällt dort je nach Schwere mit unterschiedlicher Geschwindigkeit auf ein unter der Zuliefervorrichtung befindliches Sortierband, welches in Förderrichtung stark, beispielsweise unter ca. 40°, ansteigt. Durch den starken Aufprall, der durch Anordnung einer Prallplatte hinter der Bandfläche noch verstärkt werden soll, springen die harten Anteile des Wertstoffgemisches vom Band in eine Sammelschütte, während der Papieranteil auf dem Förderband haften und bis zum Bandende mitgenommen werden soll, wo er ebenfalls gesammelt wird.

Diese Anordnung hat sich für eine saubere Trennung der Gemischanteile als praktisch ungeeignet erwiesen. Der als wesentlich für die Trennwirkung betrachtete Aufprall ist eher störend als nützlich, da dadurch nicht nur ein großer Teil der Glasanteile zu Bruch geht, zersplittert und daher schwer weiterzuverarbeiten ist, sondern zudem die schweren, harten Anteile mit dort gewünscht hoher Energie auf das Band prallen und dort auf die Anteile treffen und diese mindestens teilweise in die verkehrte Richtung mitreißen, die das Band mit nach oben fördern soll, vor allem auf die Papieranteile.

Der Erfindung liegt die Aufgabe zugrunde, eine Vorrichtung der eingangs genannten Art zu schaffen, die bei einfachem und unanfälligem Aufbau ein sauberes Trennergebnis unter schonender Behandlung insbesondere der Glasanteile garantiert.

Erfindungsgemäß wird diese Aufgabe gelöst durch eine unterschiedliche Niveaus überbrückende, in ihrem Boden im Bereich ihrer Mittellängsachse ausgesparte Rutsche im Anschluß an die Zuführung und durch die der Rutsche nachgeschaltete Sortierstrecke.

Im Rahmen der erfindungsgemäßen Lehre wird somit durch die Anordnung einer Rutsche zwischen der Zuführung und der Sortierstrecke eine Übergabe erreicht, die ganz bewußt auf die beim Stand der Technik gewollte Trennung durch Flugeigenschaften der Gemischkomponenten verzichtet, mit der vielmehr erreicht wird, daß die vorzugsweise einlagige Zuführung keine störende Verwirbelung erfährt, zumal in weiterer Ausgestaltung der Erfindung das Gemisch während des Zuführens unter Ausnutzung der unterschiedlichen Reibungskoeffizienten der Bestandteile vorsortiert, insbesondere in zwei nebeneinander geförderte Teilströme zerlegt wird. Diese Teilströme sollen selbstverständlich bei der Übergabe an die Sortierstrecke hinsichtlich ihrer Vorsortierung erhalten bleiben.

Wie bereits erwähnt, sollen mit der Erfindung insbesondere Glasbrüche und/oder zusätzliche Glaszerstückelungen aus den angegebenen Gründen vemieden werden, was durch die Erfindung in überraschend einfacher Weise mittels der Rutsche als niveauausgleichender Übergabe erreicht wird.

Ganz besonders gefördert wird der Erhalt der auf der Zuführung gegebenenfalls bereits vorgenommenen Vorsortierung durch die Aussparung im Rutschenboden, die jedoch auch im Falle einer nicht vorsortierenden Zuführung bereits eine grobe Vorsortierung des Wertstoffgemisches bewirkt, wie sich aus einer näheren Betrachtung der konstruktiven Konzeption des allgemeinen Gedankens einer im Bodenbereich ausgesparten Rutsche ergibt. Zur Bildung der mindestens zweiseitig von der Rutsche umgebenen Aussparung ist nämlich eine L-Form der Rutsche vorgesehen, wobei ein L-Schenkel an die freie Kante (Abgabekante) der Zuführung über deren Breite anschließt, während der andere Schenkel eine sich in Förderrichtung außermittig erstreckende Zunge bildet. Durch diese Gestaltung wird bereits bewirkt, daß z. B. Zeitungen oder größerflächige Teile nicht über die Zunge transportiert werden können, weil diese dazu zu schmal ist, so daß solche Teile über die Aussparung ausgetragen werden. Flaschen u. dgl. Teile, die nicht erheblich breiter als die Zunge sind, können dagegen bis zum Ende der Zunge auf dieser transportiert und somit in eine andere Richtung gelenkt werden.

Allerdings kann die Gestaltung der Rutsche allein nicht in jedem Fall verhindern, daß z. B. Flaschen, die im Bereich der Vorderkante des Rutschenbodenbereichs an die Ausnehmung gelangen, in diese fallen. Um dies zu verhindern, sind im Rahmen der Erfindung verschiedene Möglichkeiten vorgesehen, die sich aus den Unteransprüchen ergeben. Dazu kann die Zuführung quer zur Förderrichtung eine Querneigung zu der Seite hin aufweisen, auf der sich die Rutschenzunge befindet. Damit wird die Trennwirkung erheblich verbessert, so daß schweres und rollfähiges Material bereits zum größten Teil schon auf die mit der Zunge fluchtende Seite der Zuführung gelangt.

Alternativ kann diese Trennwirkung auch durch einseitige Materialaufgabe bewirkt werden, beispielsweise dadurch, daß der Ablagebereich eines der Zuführung zugeordneten Dosierers aus der Mitte über der Zuführung nach einer Seite versetzt angeordnet wird, und zwar zur Seite der Rutschenzunge hin. Dadurch wird alles Material nur auf der Seite der Zuführung aufgegeben, auf der sich die Zunge der Rutsche befindet. Damit dann auch garantiert alle, mindestens aber die größerformatigen Papieranteile vor Erreichen des Rutschenendes durch die Aussparung im Rutschenboden fallen, ist die Zunge relativ schmal, 100 bis 250 mm, vorzugsweise etwa 150 mm breit, so daß auch die im Bereich der Rutschenzunge aufgegebenen Papieranteile wie Zeitungen, Illustrierte u.dgl. über die innenliegende Seitenkante der Rutschenzunge abkippen. Dieser Effekt kann noch durch einen an der Rutschenzunge befestigten in die Aussparung hineinragenden Anschlag unterstützt werden, wodurch über die Rutschenzunge gleitende Papierteile, die im allgemeinen über die Zungeninnenkante durchhängen, an dem Anschlag anstoßen, was dann wiederum ihr Abwerfen in die Aussparung bewirkt. Durch Abknicken des Anschlags entlang der Zungeninnenkante nach oben oder durch Aufkanten der dem Materialstrom entgegengerichteten Anschlagkante kann diese Wirkung noch verbessert werden; der Überstand über der Zungenoberfläche sollte dabei im allgemeinen nicht mehr als ca. 3 bis 5 mm betragen.

Kleinstückige Anteile des Wertstoffgemisches können gegebenenfalls die Weiterbearbeitung stören. Sie können durch eine weitere Ausführungsform der Rutsche abgetrennt werden, bei der der Rutschenboden in der zuvor beschriebenen Gestalt als Rost mit in Förderrichtung verlaufenden Roststäben ausgebildet und der Abstand zwischen den Roststäben an die maximale Größe der abzutrennenden kleinstückigen Anteile angepaßt wird. An die Stelle eines Rostes kann auch ein Boden treten, der aus Lochblech mit entsprechend angepaßten Lochdurchmessern besteht. Die durchfallenden Anteile werden - etwa durch geeignete Schurren - zur Seite gelenkt und können getrennt gesammelt werden. In manchen Fällen genügt es, wenn nur der über die Rutschenbreite reichende erste Teil des Rutschenbodens als Rost oder Lochboden ausgebildet wird.

Die Zuführung kann eine solche Querneigung erhalten, daß ihre zur Rutschenzunge führende Seite die tiefer liegende ist. Während des Transports des Wertstoffgemischs vom Dosierer zur Rutsche wandern dann die schwereren Teile zur tiefer liegenden Zungenseite, während der Papieranteil seine bei der Aufgabe eingenommene Lage praktisch nicht ändert. Indem auf der Rutsche auch die noch im Bereich der Zunge befindlichen Papieranteile, wie weiter oben beschrieben, durch die Aussparung abgeworfen werden, treffen praktisch alle schwereren Anteile wegen ihrer Lage auf der tiefer liegenden Seite der Zuliefervorrichtung auf die Rutschenzunge und werden an der Aussparung vorbeigeführt. Erhält zusätzlich auch die Rutschenzunge noch eine Querneigung im gleichen Sinn wie die Zuführung, so wird wirkungsvoll verhindert, daß auch schwerere Anteile durch die Aussparung hindurchfallen. Weitere Ausführungsmöglichkeiten für die Rutsche sind in den übrigen Unteransprüchen angegeben und können je nach Bedarf unter Berücksichtigung der örtlichen Verhältnisse eingesetzt werden.

Bei Verwendung eines Schwingförderers als Zuliefervorrichtung hat sich die Überlagerung einer entgegen der Querneigung wirkenden Schwingung auf die Förderschwingung als günstig erwiesen. Durch die Überlagerung der beiden Schwingungen ergibt sich ein resultierender Fördervektor, der aus der Förderrichtung zur höhergelegenen Seite der Zuliefervorrichtung gedreht ist.

Anhand der beiliegenden Zeichnungen, in denen Ausführungsbeispiele schematisch dargestellt sind, wird die Erfindung näher erläutert. Es zeigen: ·

Fig. 1 eine erfindungsgemäße Rutsche, in Draufsicht;

Fig. 2 eine Ansicht auf die Rutsche in Richtung des Pfeils II in Fig. 1;

Fig. 3 einen Schnitt entlang III-III in Fig. 1;

Fig. 4 eine erfindungsgemäß ausgerüstete Vorrichtung mit Zuführung und Sortierstrecke sowie dazwischen angeordneter Rutsche;

Fig. 5 eine Vorrichtung ähnlich der gemäß Fig. 4, jedoch mit einem Drehteller als Sortierstrecke;

Fig. 6 eine Rutsche als Aufteiler des Wertstoffgemisches; und

Fig. 7 die Anordnung gemäß Fig. 6, in Draufsicht.

Die in Draufsicht im wesentlichen L-Form besitzende Rutsche 1 besteht aus dem Boden 2 als einem L-Schenkel, der sich in Förderrichtung gesehen, im Anfangsbereich über die Rutschenbreite erstreckt und an einer der Längsseiten in eine sich in Förderrichtung 3 erstreckenden Zunge 4 als dem anderen L-Schenkel übergeht, die sich bis zum Rutschenende 5 fortsetzt. Unkontrolliertes Abwerfen von Sortiergutanteilen kann durch parallel zur Förderrichtung verlaufende Seitenwände 6 und 7 als seitliche Rutschenbegrenzung verhindert werden. Die Zunge 4 begrenzt mit ihrer Innenkante 8 und mit der Vorderkante 9 des Bodenbereichs 2 sowie - in der dargestellten Ausführungsform - der über den Bodenbereich 2 nach vorne hinausragenden Seitenwand 7 eine etwa trapezförmige Rutschen-Aussparung 10, die für den Durchtritt der leichteren Anteile des Wertstoffgemischs, wie beispielsweise Papier, vorgesehen ist. Das Abkippen der Papieranteile über die Bodenvorderkante 9 kann erleichtert werden, wenn diese schräg zur Förderrichtung 3 verläuft und mit der Zungeninnenkante 8 einen stumpfen Winkel bildet, der einen Wert von ca. 120° nicht wesentlich übersteigen sollte. Mit ihrer aufgabeseitigen Kante wird die Rutsche 1 mit möglichst geringem Spiel an die freie Abgabekante 11 einer Zuführung 12 angelegt und gegebenenfalls angepaßt.

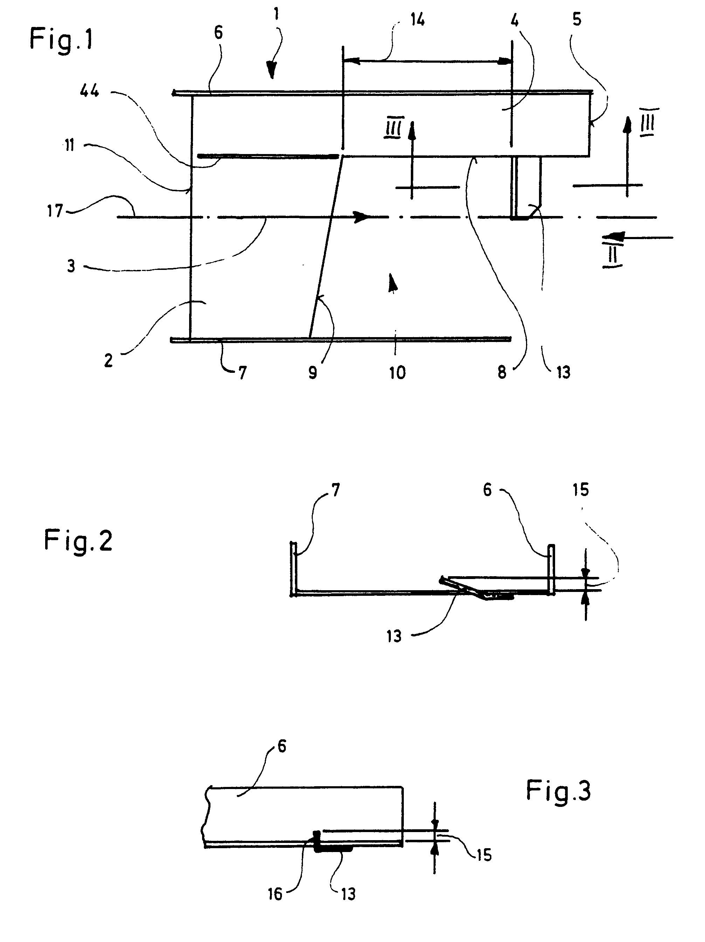

Gemäß den Darstellungen besitzt die Rutsche 1 einen Anschlag 13, der von der Bodenvorderkante 9 einen Abstand 14 von mindestens ca. 500 mm aufweisen sollte und quer zur Förderrichtung 3 mit seiner Oberfläche etwa in der Ebene der Zungenoberfläche verläuft. Bei einer besonderen, in Fig. 2 dargestellten Ausführungsform wird der Anschlag 13 entlang der Innenkante 8 der Rutschenzunge 4 auf einen Überstand 15 von maximal ca. 3 bis 5 mm nach oben gebogen bzw. abgeknickt. Fig. 3 zeigt eine weitere Ausführungsform, bei der die zur Aufgabeseite weisende Kante des Anschlags 13 zu einer Aufkantung 16 nach oben gebogen ist; auch diese ragt maximal ca. 3 bis 5 mm über die Rutschenoberfläche hinaus und im dargestellten Ausführungsbeispiel bis etwa zur Rutschenmittellängsachse 17 in die Aussparung 10 hinein.

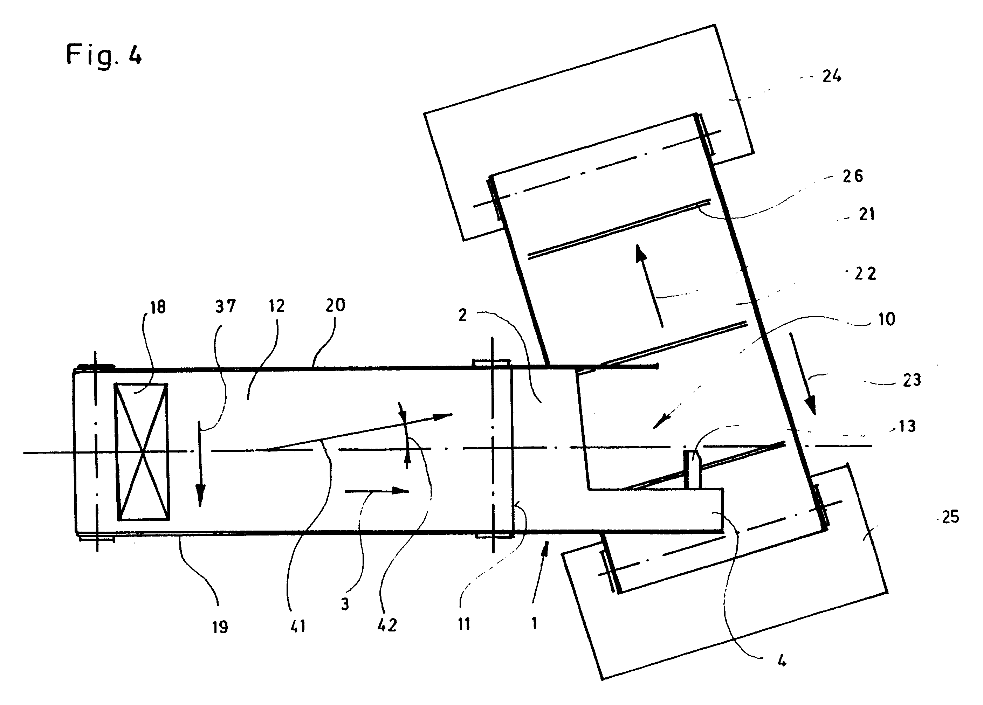

Fig. 4 zeigt ein erstes Beispiel einer Vorrichtung zum Sortieren und Trennen eines Wertstoffgemisches mit der erfindungsgemäßen Rutsche 1. Über einen Dosierer 18 wird das aus einem puffernden Vorrat angelieferte Wertstoffgemisch auf der Zuführung 12 ausgebreitet und von dieser zur Rutsche 1 gefördert, die mit möglichst geringem Zwischenraum an die abgabeseitige Kante 11 der Zuführung 12 angesetzt wird. Die Breite der Zuführung 12 stimmt mit der der Rutsche 1 überein; sie kann zwar gegebenenfalls etwas schmaler, sollte aber keinesfalls breiter als die Rutsche 1 sein. Seitenbegrenzungen 19 und 20 an den Seiten der Zuführung 12, die wie hier, als Förderband aber auch als Schwingförderer ausgebildet sein kann, verhindern, daß zur Rutsche 1 gefördertes Gut seitlich herabfallen kann. Ob die Zuführung 12 in Förderrichtung ansteigt, abfällt oder horizontal verläuft, ist grundsätzlich für die Erfindung nicht erheblich und richtet sich wesentlich nach den örtlichen Gegebenheiten. Bei nicht horizontalem Verlauf darf das Gefälle aber nicht so groß sein, daß sich Teile des Wertstoffgemisches relativ zur Zuführung 12 unkontrolliert in Bewegung setzen können.

Unterhalb der Rutsche 1 ist eine sich in Richtung des Pfeils 21 bewegende und in dieser Richtung ansteigende Sortierstrecke 22 - hier als Sortierband gestaltet - angeordnet, welche die Aufgabe hat, das durch die Trennwirkung der erfindungsgemäßen Rutsche 1 bereits vorsortierte Wertstoffgemisch in gewünschter Weise zu trennen und die Papieranteile in Richtung 21 - beispielsweise in einen Behälter 24, ein Band od. dgl. - weiterzuleiten; die schwereren Anteile wie Glas, Plastikartikel usw. rollen oder rutschen infolge der Schräglage des in Richtung des Pfeils 23 nach unten geneigten Sortierbandes 22 in Richtung 23 auf das - in der Zeichnung - untere Ende des Sortierbandes 22 und dann in einen Auffangbehälter 25 oder auf ein Band oder ähnliches. Vor allem dann, wenn der Steigungswinkel des Sortierbandes 22 zur Sicherstellung des Trennvorgangs relativ groß gewählt wird, hat sich die Anordnung von Mitnehmern 26 auf dem Sortierband 22 quer zur Förderrichtung 21 als vorteilhaft erwiesen.

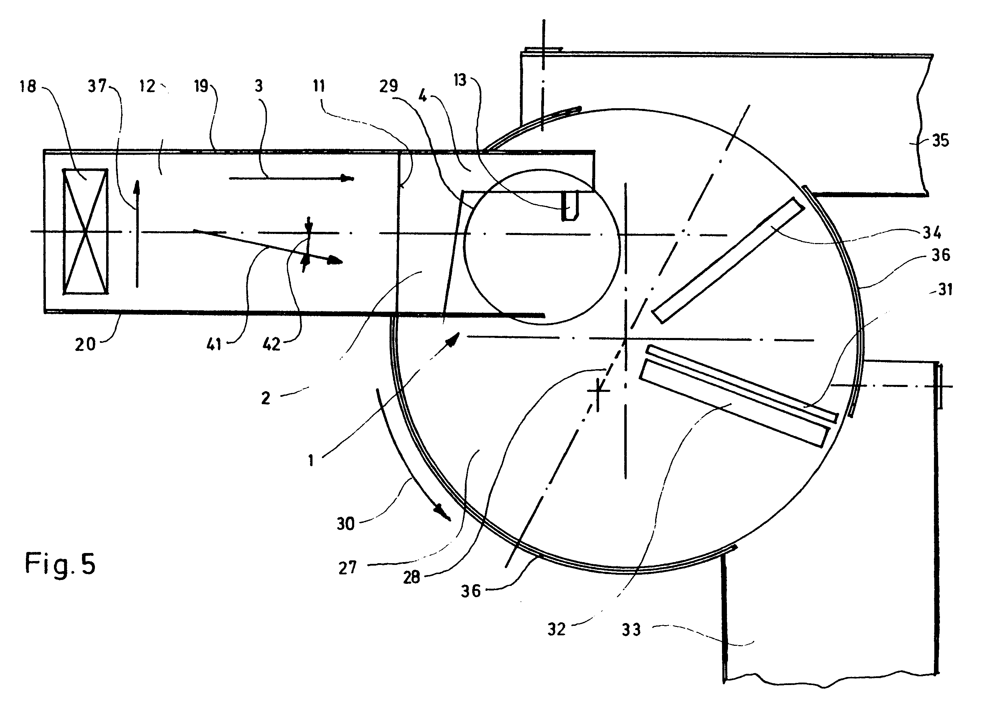

Ein weiteres Anwendungsbeispiel für die erfindungsgemäße Rutsche 1 zeigt Fig. 5. Die unterhalb der Rutsche 1 angeordnete Sortierstrecke ist hier als Drehteller 27 ausgebildet, der mit einer etwa 1,2 m/s möglichst nicht übersteigenden Umfangsgeschwindigkeit um seine vertikale Symmetrieachse als Drehachse 28 rotiert, die derart schräggestellt ist, daß der Drehteller 27 - auf die Rutsche 1 bezogen - im Bereich der Rutschenzunge 4 tiefer liegt als auf seiner dieser gegenüberliegenden Tellerseite. Die im Übergabebereich 29 vorsortiert auf den Drehteller 27 gelangenden Wertstoffanteile werden infolge der Schräglage des Drehtellers voneinander getrennt: Die Papieranteile bleiben auf der Telleroberfläche liegen und werden in Drehrichtung 30 mitgenommen. Sie gelangen dabei in den Bereich eines Abstreifers 31, von dem sie gegebenenfalls unterstützt durch eine Blas- und/oder Absaugvorrichtung 32, beispielsweise auf ein Förderband 33 abgeworfen werden. Die schwereren Anteile rollen oder rutschen von der Rutschenzunge und zu einem geringen Teil auch durch die Aussparung 10 auf die schräge Oberfläche des Drehtellers 27 und von dort der Oberflächenneigung folgend und gegebenenfalls durch einen Abweiser 34 unterstützt auf ein weiteres Förderband 35, von wo aus sie zur Aufarbeitung weitergegeben werden. Unkontrolliertes seitliches Herabfallen von Material wird durch eine Ringeinfassung 36 verhindert, die den Drehteller umgibt und nur an den Abwurfstellen Einschnitte für den Materialdurchlaß besitzt.

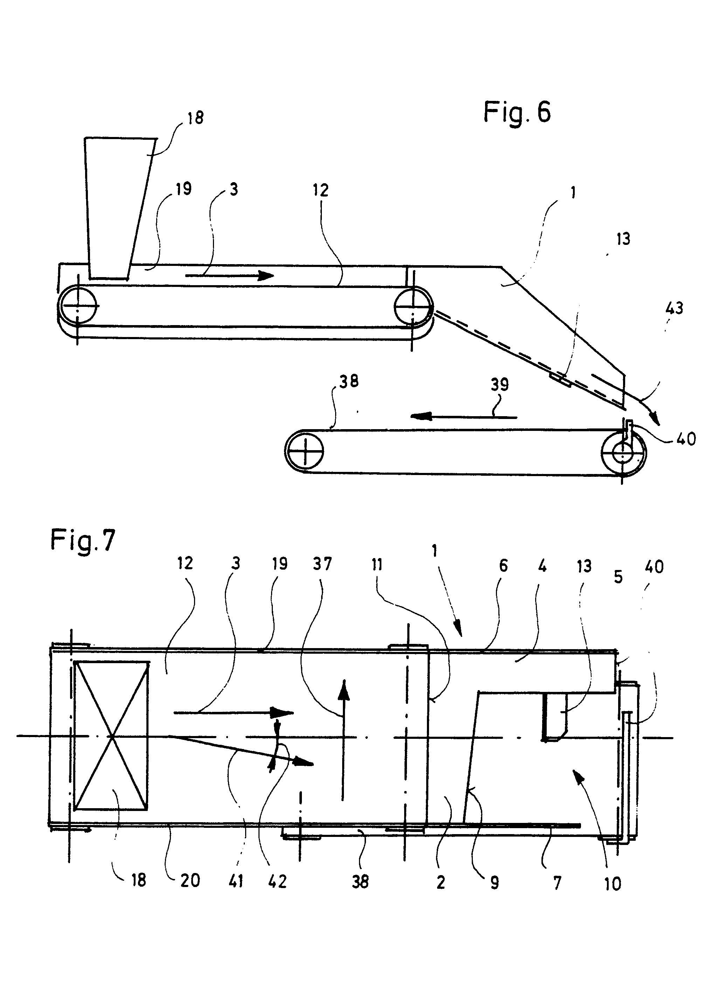

Bei der Seitenansicht gemäß Fig. 6 ist die Seitenbegrenzung 20 der Zuführung 12 abgenommen worden. Die Zuführung 12 besteht hier aus einem Förderband, das quer zur Förderrichtung 3 in Pfeilrichtung 37 (Fig. 7) quergeneigt ist. Der Dosierer 18 breitet das Wertstoffgemisch in dünner, praktisch einlagiger Schicht auf der Zuführung aus. Zur Verbesserung der Trennwirkung wird die Aufgabe dabei so weit, wie dies ohne Gefährdung der Ausbreitung in dünner Lage möglich ist, zur höherliegenden Seite der Zuführung 12 gerückt. Seitliches Herabfallen von Wertstoffanteilen wird durch die Seitenbegrenzungen 19 und 20 verhindert. Die Zuführung 12 und die Rutsche 1 weisen dieselbe Breite auf. Unterhalb der Rutsche 1 etwa am Rutschenende 5 beginnend befindet sich ein Transportband 38 für die Papieranteile, dessen Lauf- bzw. Transportrichtung 39 der Förderrichtung 3 der Zuführung 12 entgegenläuft. Ein am Aufgabeende des Transportbandes 38 angebrachter Papierabweiser 40 verhindert, das von der Rutsche 1 kommende Papieranteile entgegen der Transportrichtung 39 wegrutschen.

Das auf der Zuführung 12 ausgebreitete Wertstoffgemisch teilt sich infolge der Querneigung 37 bereits auf seinem Weg zur Rutsche 1 auf, da die Glas- und Plastikanteile tiefer liegenden Seiten rollen oder rutschen, während der Papieranteil überwiegend die bei der Aufgabe eingenommene Lage beibehält. Allenfalls schwerere und glatte Papieranteile wie Illustrierte, Hefte und ähnliches rutschen ebenfalls zur tiefer liegenden Bandseite, ohne daß dadurch allerdings die Trennwirkung der Rutsche 1 beeinträchtigt wird, was weiter unten erläutert werden wird.

Bei Verwendung eines Schwingförderers als Zuführung 12 kann durch die systembedingten Förderschwingungen die Reibung zwischen der Förderoberfläche und den Papieranteilen allerdings so stark vermindert werden, daß auch diese zu einem großen Teil zur tiefer liegenden Seite wandern und die Wirkung der Querneigung 37 in Frage stellen. Dem kann erfindungsgemäß dadurch begegnet werden, daß der Förderschwingung in Förderrichtung 3 eine entgegen der Querneigung 37 wirkende überlagert wird, so daß sich ein aus der Mittelachse 17 zur höher liegenden Seite der Zuliefervorrichtung 12 hin gedrehter resultierender Fördervektor 41 ergibt.

Mit der Mittellängsachse 17 bildet der resultierende Fördervektor 41 einen Winkel 42, der vorteilhaft zwischen ca. 2° und 15° liegen und auch abhängig vom Verhältnis von Breite zur Länge der Zuführung 12 bestimmt werden kann.

Durch die überlagerte Querschwingung wird erreicht, daß die leichteren Anteile, insbesondere das Papier, auf dem Weg zur Rutsche 1 zum überwiegenden Teil zur höhergelegenen Seite wandern, wo sie durch die Seitenbegrenzung 20 am Herabfallen gehindert werden. Die schwereren Anteile sammeln sich bei geeigneter Wahl der Querneigung und des Winkels an der tiefer liegenden Seite der Zuführung 12, wo sie durch die Seitenbegrenzung 19 ebenfalls am seitlichen Verlassen der Zuführung gehindert werden. Das so vorsortierte Wertstoffgemisch erreicht die Rutsche 1 in einer Zusammensetzung, bei der sich die schwereren Anteile und gegebenenfalls auch Illustrierte, Hefte, Pappen usw. an der tiefer liegenden Seite der Zuführung befinden, während sich der größere Teil des Papiermaterials auf der höher gelegenen Seite befindet, beim Weitertransport auf die Aussparung 10 der Rutsche 1 trifft und durchfällt. Die Glas- und Plastikanteile und ähnliches rutschen, von der Seitenwand 6 geführt bis zum Ende der Rutschenzunge 4 und fallen in Richtung des Pfeils 43 in einen Auffangbehälter (nicht dargestellt) oder gelangen zu einem ebenfalls nicht dargestellten weiteren Transportmittel. Soweit Papieranteile zur tiefer liegenden Seite gelangt sind, kippen sie entweder schon an der Bodenvorderkante 9, unterstützt durch deren schräge Form, ab oder stoßen mit ihrem über die Zungeninnenkante 8 hinwegreichenden Teil gegen den Anschlag 13 und werden dadurch abgeworfen. Bei vorhandenem Überstand 15 des Anschlags 13 werden auch steife, nicht über die Zungeninnenkante 8 nach unten hängende Anteile erfaßt.

Besonders bei schwereren und/oder glatten Papieranteilen besteht die Möglichkeit, daß sie beim Auftreffen auf das Transportband 38 entgegen der Transportrichtung 39 weiterrutschen und sich wieder mit den Glasusw. Anteilen mischen. Um dies zu verhindern, wird, wie erwähnt, am Anfang des Transportbandes 38 der Papierabweiser 40 vorgesehen; vor allem dann, wenn der Anschlag 13 an der Rutschenzunge 4 fehlt, ist dieser Papierabweiser 40 von besonderer Bedeutung.

Eine weitere Verbesserung der Trennleistung, insbesondere bezüglich der schwereren Anteile läßt sich erzielen, indem auch die Rutsche 1 quer zur Förderrichtung 3 so geneigt wird, daß die Rutschenzunge 4 tiefer liegt als die ausgesparte Rutschenseite. Durch das Anbringen einer Papierleitleiste 44 im Bereich des über die Breite der Rutsche 1 reichenden Bodens 2 zwischen der Abgabekante 11 und der Rutschenzunge 4 etwa in Verlängerung der Zungeninnenkante 8 kann verhindert werden, daß Papieranteile zur Rutschenzunge 4 wandern. Schwerere Anteile dagegen, die sich noch in Richtung auf die Aussparung 10 hin bewegen, können trotzdem noch vor Erreichen der Bodenvorderkante 9 zur Rutschenzunge gelangen. Auf diese Weise wird paktisch ausgeschlossen, daß schwerere Anteile durch die Aussparung 10 fallen, während der Anschlag 13 dafür sorgt, daß auch die sich über die Rutschenzunge bewegenden Papieranteile vor Erreichen des Rutschenendes 5 durch die Aussparung 10 abgeworfen werden.

**Patentansprüche**

1. Vorrichtung zum Sortieren und Trennen eines Wertstoffgemisches, insbesondere eines überwiegend aus Flaschen und Papier bestehenden Wertstoffgemisches mit einer einer Zuführung vorgeordneten Einspeisung und einer der Zuführung nachgeordneten Sortierstrecke, gekennzeichnet durch eine unterschiedliche Niveaus überbrückende, in ihrem Boden (2) im Bereich ihrer Mittellängsachse ausgesparte Rutsche (1) im Anschluß an die Zuführung (12) und dadurch daß der Rutsche (1) die Sortierstrecke (22, 27) nachgeschaltet ist.

2. Vorrichtung nach Anspruch 1, gekennzeichnet durch eine L-Form der Rutsche (1), wobei ein L-Schenkel an die freie Kante (Abgabekante) (11) der Zuführung (12) über deren Breite anschließt, während der andere Schenkel eine sich in Förderrichtung (3) außermittig erstreckende Zunge (4) bildet.

3. Vorrichtung nach Anspruch 1 oder 2, dadurch gekennzeichnet, daß die Zunge (4) mit ihrer Innenkante (8) und dem freien Ende des Bodenbereichs (2) (Bodenvorderkante (9)) die Aussparung (10) begrenzt.

4. Vorrichtung nach einem oder mehreren der Ansprüche 1 bis 3, gekennzeichnet durch eine durchgehende Breite von 100 mm bis 250 mm, vorzugsweise etwa 150 mm, der Zunge (4).

5. Vorrichtung nach einem oder mehreren der Ansprüche 1 bis 4, dadurch gekennzeichnet, daß die Rutsche (1) mit zwei mindestens über einen wesentlichen Teil ihrer Länge reichenden Seitenwänden (6, 7) versehen ist.

6. Vorrichtung nach einem oder mehreren der Ansprüche 1 bis 5, dadurch gekennzeichnet, daß die Rutschenzunge (4) in einem Abstand (14) von mindestens ca. 500 mm von der Bodenvorderkante (9) einen etwa in der Ebene der Zungenoberfläche liegenden, in die Aussparung (10) hineinragenden Anschlag (13) aufweist.

7. Vorrichtung nach Anspruch 6, dadurch gekennzeichnet, daß der Anschlag (13) entlang der Zungeninnenkante (8) nach oben abgeknickt ist und mit einem Überstand (15) von maximal ca. 3 bis 5 mm über die Oberfläche der Zunge (4) hinausragt.

8. Vorrichtung nach Anspruch 6 oder 7, dadurch gekennzeichnet, daß die zur Aufgabeseite der Rutsche (1) weisende Kante des Anschlags (13) zu einer Aufkantung (16) hochgebogen ist, welche mit einem Überstand (15) von maximal ca. 3 bis 5 mm über die Oberfläche der Zunge (4) hinausragt.

9. Vorrichtung nach einem oder mehreren der Ansprüche 1 bis 8, dadurch gekennzeichnet, daß die mit einem Dosierer (18) ausgestattete Zuführung (12) etwa, aber höchstens so breit wie die Rutsche (1) ist, und daß der Rutsche mindestens ein der Weitergabe mindestens eines Teils des Wertstoffgemischs dienender und dieses von der Rutsche (1) übernehmender Förderer (22; 27; 38) nachgeordnet ist.

10. Vorrichtung nach Anspruch 9, dadurch gekennzeichnet, daß der Ablagebereich des Dosierers (18) aus der Mitte über der Zuführung (12) nach einer Seite versetzt ist.

11. Vorrichtung nach Anspruch 10, dadurch gekennzeichnet, daß der Ablagebereich des Dosierers (18) auf der Seite der Rutschenzunge (4) liegt.

12. Vorrichtung nach einem oder mehreren der Ansprüche 1 bis 11, dadurch gekennzeichnet, daß die Zuführung (12) quer zur Förderrichtung (3) eine Querneigung (37) zu der Seite hin aufweist, auf der sich die Rutschenzunge (4) befindet.

13. Vorrichtung nach Anspruch 10 oder 12, dadurch gekennzeichnet, daß der Ablagebereich des Dosierers (18) zur höher liegenden Seite der Zuführung (12) hin verschoben ist.

14. Vorrichtung nach Anspruch 12 oder 13, dadurch gekennzeichnet, daß die Rutsche (1) zur Seite der Zunge (4) hin geneigt ist.

15. Vorrichtung nach einem oder mehreren der Ansprüche 1 bis 14, gekennzeichnet durch einen Papierabweiser (40) an einem unterhalb der Rutsche angeordneten, in Gegenrichtung fördernden Transportband (38) außerhalb des unmittelbaren Wirkbereichs der Aussparung (10) am Beginn des abfließenden Papierstroms.

16. Vorrichtung nach einem oder mehreren der Ansprüche 1 bis 15, dadurch gekennzeichnet, daß die Rutsche (1) zwei symmetrisch angeordnete Zungen besitzt und die Rutsche (1) von ihrer Mittellängsachse (17) aus beidseitig nach unten abgewinkelt ist.

17. Vorrichtung nach einem oder mehreren der Ansprüche 1 bis 16, dadurch gekennzeichnet, daß die Zunge(n) (4) der Rutsche (1) in Richtung ihrer Längserstreckung auszufahren ist (sind).

18. Vorrichtung nach einem oder mehreren der Ansprüche 1 bis 17, dadurch gekennzeichnet, daß die Rutsche (1) insgesamt oder teilweise in der Ebene ihrer Neigung zu verschwenken ist.

19. Vorrichtung nach einem oder mehreren der Ansprüche 1 bis 18, gekennzeichnet durch Förderbänder und/oder Schwingförderer als Zuführung und/oder Sortierstrecke.

20. Vorrichtung nach Anspruch 19, gekennzeichnet durch einen Schwingförderer als Zuführung (12), dessen Schwingungen in Förderrichtung (3) solchen überlagert sind, die quer zur Längsachse entgegen der Querneigung (37) wirken.

21. Vorrichtung nach Anspruch 20, dadurch gekennzeichnet, daß die sich überlagernden Schwingungen in einem Fördervektor (41) resultieren, der um einen Winkel α (42) zur höheren Seite der Zuliefervorrichtung (12) hin gedreht ist.

22. Vorrichtung nach einem oder mehreren der Ansprüche 1 bis 21, dadurch gekennzeichnet, daß der Rutschenboden (2) als Siebboden ausgeführt ist.

## Claims

1. Apparatus for sorting and separating a mixture containing valuable materials, especially a mixture consisting predominantly of bottles and paper, comprising a charging station disposed before a feed and a sorting zone disposed after the feed, characterized by a chute (1), bridging across different levels and cut away in its floor (2) in the region of its central longitudinal axis, this chute following the feed (12), and by the fact that the sorting zone (22, 27) is disposed behind the chute (1).

2. Apparatus according to Claim 1, characterized by an L-shape of the chute (1), wherein one L-arm adjoins the free edge (transfer edge) (11) of the feed (12) across its width, whereas the other arm constitutes a tongue (4) extending off-centre in the direction of conveying (3).

3. Apparatus according to Claim 1 or 2, characterized in that the tongue (4) forms a boundary to the cutout (10) by its inner edge (8) and the free end of the floor zone (2) (floor front edge (9)).

4. Apparatus according to one or more of Claims 1 to 3, characterized by a continuous width of 100 mm to 250 mm, preferably approximately 150 mm, of the tongue (4).

5. Apparatus according to one or more of Claims 1 to 4, characterized in that the chute (1) is equipped with two lateral walls (6, 7) extending at least along a considerable portion of its length.

6. Apparatus according to one or more of Claims 1 to 5, characterized in that the chute tongue (4) possesses, at a distance (14 of at least approximately 500 mm from the floor forward edge (9, a stop (13) projecting into the cutout (10) and lying approximately in the plane of the tongue surface.

7. Apparatus according to Claim 6, characterized in that the stop (13) is upwardly kinked along the inner edge (8) of the tongue and projects, with an upward projection (15) of at most approx. 3 to 5 mm, above the surface of the tongue (4).

8. Apparatus according to Claim 6 or 7, characterized in that the edge of the stop (13) facing towards the feed side of the chute (1) is upwardly bent to form a flange (16), which projects above the surface or the tongue (4) by a distance (10) of at most approx. 3 to 5 mm.

9. Apparatus according to one or more of Claims 1 to 8, characterized in that the feed (12), equipped with a metering device (18), has approximately the same but at most the same width as the chute (1) and that at least one conveyor (22; 27; 38), which serves for onward transmission at least of a part of the mixture containing valuable materials and receives this from the chute (1), is disposed behind the chute.

10. Apparatus according to Claim 9, characterized in that the discharge zone of the metering device (18) is offset to one side from the centre above the feed (12).

11. Apparatus according to Claim 10, characterized in that the discharge zone of the metering device (18) lies on the side towards the chute tongue (4).

12. Apparatus according to one or more of Claims 1 to 11, characterized in that the feed (12) has a transverse inclination (37) transversely to the conveying direction (3) towards that side on which the chute tongue (4) is situated.

13. Apparatus according to Claim 10 or 12, characterized in that the discharge zone of the metering device (18) is displaced towards the higher side of the feed (12).

14. Apparatus according to Claim 12 or 13, characterized in that the chute (1) is inclined towards the side of the tongue (4).

15. Apparatus according to one or more of Claims 1 to 14, characterized by a paper deflector (40), at a conveyor belt (38) disposed beneath the chute and conveying in the opposite direction, outside the immediate range of action of the cutout (10) at the start of the downwardly flowing paper stream.

16. Apparatus according to one or more of Claims 1 to 15, characterized in that the chute (1) possesses two symmetrically disposed tongues and the chute (1) is downwardly cranked from its central longitudinal axis (17) towards both sides.

17. Apparatus according to one or more of Claims 1 to 16, characterized in that the tongue or tongues (4) of the chute (1) is (are) extensible in the direction of their longitudinal extent.

18. Apparatus according to one or more of Claims 1 to 17, characterized in that the chute (1) can be pivotted, wholly or partly, in the plane of its inclination.

19. Apparatus according to one or more of Claims 1 to 18, characterized by conveyor belts and/or vibrating conveyors as feed and/or sorting zone.

20. Apparatus according to Claim 19, characterized by a vibrating conveyor as feed (12), onto the vibrations of which in the conveying direction (3) other vibrations acting transversely to the longitudinal axis in opposition to the transverse inclination (37) are superimposed.

21. Apparatus according to Claim 20, characterized in that the mutually superimposed vibrations result in a conveying vector (41) which is rotated through en angle $\alpha$ (42) towards the higher side of the supply apparatus (12).

22. Apparatus according to one or more of Claims 1 to 21, characterized in that the chute floor (2) is constructed as a sieve floor.


**Revendications**

1. Appareil pour trier et séparer les éléments de valeur d'un mélange, notamment d'un mélange comprenant surtout des bouteilles et du papier, qui comporte un dispositif d'alimentation situé en avant d'un dispositif d'amenée et un trajet de triage situé en arrière du dispositif d'amenée, caractérisé en ce qu'il comporte une goulotte (1) qui relie des niveaux différents, dont le fond (2) est évidé dans la zone de son axe longitudinal médian et qui se raccorde au dispositif d'amenée (12) et en ce que la goulotte (1) est suivie du trajet de triage (22, 27).

2. Appareil selon la revendication 1, caractérisé en ce que la goulotte (1) a une forme en L, l'une des branches de l'L se raccordant au bord libre (bord de sortie) (11) du dispositif d'amenée (12) dans le sens de la largeur de celui-ci tandis que l'autre branche forme une languette (4) qui s'étend d'une manière excentrée dans la direction de transport (3).

3. Appareil selon l'une des revendications 1 ou 2, caractérisé en ce que le bord intérieur (8) de la languette (4) et l'extrémité libre du fond (2) (bord avant (9) du fond) délimitent l'évidement (10).

4. Appareil selon l'une ou plusieurs des revendications 1 a 3, caractérisé en ce que la languette (4) a, sur toute sa longueur, une largeur de 100 mm à 250 mm, de préférence de 150 mm environ.

5. Appareil selon l'une ou plusieurs des revendications 1 à 4, caractérisé en ce que la goulotte (1) est munie, au moins sur la plus grande partie de sa longueur, de parois latérales (6, 7).

6. Appareil selon l'une ou plusieurs des revendications 1 à 5, caractérisé en ce qu'à une distance (14) d'au moins 500 mm du bord avant (9) du fond, la languette (4) de la goulotte comporte une butée (13) située dans le plan de la surface de la languette et dépassant à l'intérieur de l'évidement (10).

7. Appareil selon la revendication 6, caractérisé en ce que la butée (13) est pliée vers le haut le long du bord intérieur (8) de la languette et dépasse, sur une hauteur maximale (15) de 3 à 5 mm environ, la surface de la languette (4).

8. Appareil selon l'une des revendications 6 ou 7, caractérisé en ce que le bord de la butée (13) qui est le plus près du côté de sortie de la goulotte (1) est replié vers le haut en formant un rebord (16) qui dépasse, sur une hauteur maximale (15) de 3 à 5 mm environ, la surface de la languette (4).

9. Appareil selon l'une ou plusieurs des revendications 1 à 8, caractérisé en ce que le dispositif d'amenée (12), que comporte un dispositif d'alimentation contrôlée (18), est à peu près, mais tout au plus aussi large que la goulotte (1) et en ce que la goulotte est suivie au moins par un dispositif de transport (22, 27, 38) qui sert au transport ultérieur d'au moins une partie du mélange contenant des éléments de valeur qu'il reçoit de la goulotte (1).

10. Appareil selon la revendication 9, caractérisé en ce que la zone de déversement du dispositif d'alimentation contrôlée (18) est décalée d'un côté au-dessus du dispositif d'amenée (12).

11. Appareil selon la revendication 10, caractérisé en ce que la zone de déversement du dispositif d'alimentation contrôlée (18) se trouve du même côté que la languette (4) de la goulotte.

12. Appareil selon l'une ou plusieurs de revendications 1 à 11, caractérisé en ce que le dispositif d'amenée (12) présente, dans le sens transversal par rapport à la direction de transport (3), une inclinaison (37) vers le côté où se trouve la languette (4) de la goulotte.

13. Appareil selon l'une des revendications 10 ou 12, caractérisé en ce que la zone de déversement du dispositif d'alimentation contrôlée (18) est déplacée du côté le plus haut du dispositif d'amenée (12).

14. Appareil selon l'une des revendications 12 ou 13, caractérisé en ce que la goulotte (1) est inclinée vers le côté de languette (4).

15. Appareil selon l'une ou plusieurs des revendications 1 à 14, caractérisé en ce qu'il comprend un dispositif (40) de séparation des papiers monté sur une bande transporteuse (38) située au-dessous de la goulotte et assurant le transport en sens inverse, à l'extérieur de la zone d'action directe de l'évidement (10) au début du courant d'évacuation des papiers.

16. Appareil selon l'une ou plusieurs des revendications 1 à 15, caractérisé en ce que la goulotte (1) comporte deux languettes disposées symétriquement et que la goulotte (1) est pliée vers le bas des deux côtés de son axe longitudinal médian (17).

17. Appareil selon l'une ou plusieurs des revendications 1 à 16, caractérisé en ce que la ou les languettes (4) de la goulotte (1) sortent dans le sens de leur longueur.

18. Appareil selon l'une ou plusieurs des revendications 1 à 17, caractérisé en ce que la goulotte (1) peut pivoter totalement ou partiellement dans le plan correspondant à son inclinaison.

19. Appareil selon l'une ou plusieurs des revendications 1 à 18, caractérisé en ce que son dispositif d'amenée et/ou son trajet de triage sont constitués par des bandes transporteuses et/ou des transporteurs oscillants.

20. Appareil selon la revendciation 19, caractérisé en ce que son dispositif d'amenée (12) est constitué par un transporteur oscillant dont les oscillations dans la direction de transport (3) se superposent à des oscillations orientées transversalement par rapport à l'axe longitudinal et dirigées dans le sens opposé à l'inclinaison transversale (37).

21. Appareil selon la revendication 1, caractérisé en ce que les oscillations qui se superposent ont pour résultante un vecteur de transport (41) qui est tourné d'un angle α (42) vers le côté le plus élevé du dispositif d'amenée (12).

22. Appareil selon l'une ou plusieurs des revendications 1 à 21, caractérisé en ce que le fond (2) de la goulotte est un fond à tamis.

Fig.1

Fig.2

Fig.3

Fig. 4

0119443

Fig. 5

0119443

Fig. 6

Fig. 7